# EUROPEAN PATENT APPLICATION

(11) **EP 3 696 899 A1**
(43) Date of publication of application: **19.08.2020**
(21) Application number: 18867229.9
(22) Date of filing: 31.07.2018
(51) Int. Cl.: H01M 10/04, H01M 10/0587, H01M 2/26

(54) **ELECTRODE ASSEMBLY AND SECONDARY BATTERY COMPRISING SAME**

(30) Priority: 11.10.2017 KR 20170129251
(71) Applicant: Samsung SDI Co., Ltd., Yongin-si, Gyeonggi-do 17084 (KR)
(72) Inventor: JEONG, Hyun Ki, Yongin-si Gyeonggi-do 17084 (KR); PARK, Jung Hyun, Yongin-si Gyeonggi-do 17084 (KR); OYAGI, Nobuyuki, Yongin-si Gyeonggi-do 17084 (KR)
(74) Representative: Shearman, James Ward
(86) International application number: PCT/KR2018/008706
(87) International publication number: WO 2019/074197

(57) **Abstract**

The present invention relates to an electrode assembly and a secondary battery comprising the same. The technical objective to be resolved is to provide an electrode assembly having a positive electrode tab and a negative electrode tab aligned on a same line approximately at the center of the radius of the cross section of the electrode assembly, and are attached so as not to overlap each other in the longitudinal direction, thereby making it possible to improve the winding roundness, and a positive electrode plate coating portion being formed on a positive electrode plate, which is adjacent to the negative electrode tab, and which has no positive electrode tab formed thereon, thereby preventing precipitation of lithium during overcharging. To this end, the present invention provides a secondary battery comprising an electrode assembly comprising a positive electrode plate having a positive electrode tab attached thereto, a negative electrode plate having a negative electrode tab attached thereto, and a separator interposed between the positive electrode plate and the negative electrode plate, wherein the positive electrode plate, the separator, and the negative electrode plate are wound while being laminated such that the positive electrode tab protrudes from the longitudinal upper portion of the electrode assembly by a predetermined length, the negative electrode tab protrudes from the longitudinal lower portion of the electrode assembly by a predetermined length, the positive electrode tab and the negative electrode tab are at a location corresponding to a value between 1/3 of the radius of the cross section of the electrode assembly and 2/3 thereof, and the lower portion of the positive electrode tab and the upper portion of the negative electrode tab do not overlap each other.

## Description

### TECHNICAL FIELD

The present disclosure relates to an electrode assembly and a secondary battery comprising the same.

### BACKGROUND ART

In general, a secondary battery is manufactured by accommodating an electrode assembly including a positive electrode plate, a negative electrode plate, and a separator interposed therebetween in a case with an electrolyte. Unlike a primary battery that is not rechargeable, the secondary battery can be charged and discharged. With technological advances in mobile devices, such as cellular phones and notebook computers, and increased production yields, demand for secondary batteries as energy sources has rapidly increased. Recently, research and development in secondary batteries has been actively conducted for use as alternative energy sources to replace fossil fuels as energy sources for electric vehicles or hybrid vehicles.

Currently commercially available secondary batteries include a nickel-cadmium battery, a nickel-hydrogen battery, a nickel-zinc battery, a lithium secondary battery, and so on. Specifically, the lithium secondary battery generates little memory effect, compared to a nickel-based secondary battery, making the lithium secondary battery capable of being freely charged and discharged, and has several advantages including a low self-discharge rate and a high-energy density. Accordingly, the lithium secondary battery is drawing increasing attention.

However, the lithium secondary battery may undergo excessively active reactions between a positive electrode active material and an electrolyte constituting the lithium secondary battery due to overcharging to a certain level of voltage or higher, resulting in a structural collapse of the positive electrode active material, an oxidation of the electrolyte, or precipitation of lithium in a negative electrode active material. If such a state is continued, the lithium secondary battery may ignite or explode.

### DESCRIPTION OF EMBODIMENTS

### TECHNICAL PROBLEM

To solve the technical objective, provided are is to provide an electrode assembly and a secondary battery comprising the same, the electrode assembly having a positive electrode tab and a negative electrode tab positioned such that the positive electrode tab and the negative electrode tab are aligned on a same line approximately at the center of the radius of the cross section of the electrode assembly, and are attached so as not to overlap each other in the longitudinal direction, thereby making it possible to improve the winding roundness.

In addition, another objective of the present invention is to provide an electrode assembly and a secondary battery comprising the same, the electrode assembly comprising a positive electrode plate coating portion being formed on a positive electrode plate, which is adjacent to the negative electrode tab, and which has no positive electrode tab formed thereon, thereby preventing precipitation of lithium during overcharging.

### SOLUTION TO PROBLEM

According to an aspect of the present disclosure, provided is a secondary battery comprises an electrode assembly comprising a positive electrode plate having a positive electrode tab attached thereto, a negative electrode plate having a negative electrode tab attached thereto, and a separator interposed between the positive electrode plate and the negative electrode plate, wherein the positive electrode plate, the separator, and the negative electrode plate are wound while being laminated such that the positive electrode tab protrudes from the longitudinal upper portion of the electrode assembly by a predetermined length, the negative electrode tab protrudes from the longitudinal lower portion of the electrode assembly by a predetermined length, the positive electrode tab and the negative electrode tab are at a location corresponding to a value between 1/3 of the radius of the cross section of the electrode assembly and 2/3 thereof, and the lower portion of the positive electrode tab and the upper portion of the negative electrode tab do not overlap each other.

The positive electrode tab and the negative electrode tab may be aligned on a same line in a lengthwise direction of the electrode assembly, and may be positioned at the positive electrode plate and the negative electrode plate that are closest to each other on the basis of the separator.

A positive electrode half-coating portion may be provided at an outer region of the positive electrode plate, in which the positive electrode tab is positioned at the inward side of the negative electrode tab on the basis of the separator, and which is closest to the negative electrode tab on the basis of the separator, the positive electrode half-coating portion having a positive electrode coating layer formed on only one surface of a positive electrode current collector of the positive electrode, and a non-coating layer formed on the other surface opposite to the one surface.

The positive electrode plate may include a first positive electrode non-coating portion having no positive electrode coating layer formed on one surface of the positive electrode current collector, the first positive electrode non-coating portion having the positive electrode tab attached thereto, and a second positive electrode non-coating portion having no positive electrode coating layer formed at a region corresponding to the region where the first positive electrode non-coating portion is formed, on the other surface opposite to the one surface of the positive electrode current collector. Here, the second positive electrode non-coating portion may extend one turn outwardly from the positive electrode tab, thus forming the positive electrode plate half-coating layer.

The negative electrode plate may further include a first negative electrode non-coating portion having no negative electrode coating layer formed on one surface of a negative electrode current collector, the first negative electrode non-coating portion having the negative electrode tab attached thereto, and a second negative electrode non-coating portion having no negative electrode coating layer formed at a region corresponding to the region where the first negative electrode non-coating portion is formed, on the other surface opposite to the one surface of the negative electrode current collector. Here the positive electrode half-coating portion may have a longitudinal width larger than that of the first negative electrode non-coating portion, the longitudinal width being perpendicular to the lengthwise direction of the positive electrode half-coating portion.

The positive electrode plate may include a first positive electrode non-coating portion having no positive electrode coating layer formed on one surface of the positive electrode current collector, the first positive electrode non-coating portion having the positive electrode tab attached thereto, and a second positive electrode non-coating portion having no positive electrode coating layer formed at a region corresponding to the region where the first positive electrode non-coating portion is formed, on the other surface opposite to the one surface of the positive electrode current collector. Here, the first positive electrode non-coating portion may extend one turn outwardly from the positive electrode tab to the outward side, thus forming the positive electrode plate half-coating layer.

A positive electrode half-coating portion may be provided at an inner region of the positive electrode plate, in which the positive electrode tab is positioned at the inward side of the negative electrode tab on the basis of the separator, and which is closest to the negative electrode tab on the basis of the separator, the positive electrode half-coating portion having a positive electrode coating layer formed on only one surface of a positive electrode current collector of the positive electrode, and a non-coating layer formed on the other surface opposite to the one surface.

The positive electrode plate may include a first positive electrode non-coating portion having no positive electrode coating layer formed on one surface of the positive electrode current collector, the first positive electrode non-coating portion having the positive electrode tab attached thereto, and a second positive electrode non-coating portion having no positive electrode coating layer formed at a region corresponding to the region where the first positive electrode non-coating portion is formed, on the other surface opposite to the one surface of the positive electrode current collector. Here, the second positive electrode non-coating portion may extend one turn inwardly from the positive electrode tab to form the positive electrode plate half-coating layer.

The negative electrode plate may further include a first negative electrode non-coating portion having no negative electrode coating layer formed on one surface of a negative electrode current collector, the first negative electrode non-coating portion having the negative electrode tab attached thereto, and a second negative electrode non-coating portion having no negative electrode coating layer formed at a region corresponding to the region where the first negative electrode non-coating portion is formed, on the other surface opposite to the one surface of the negative electrode current collector. Here, the positive electrode half-coating portion has a longitudinal width larger than that of the first negative electrode non-coating portion, the longitudinal width being perpendicular to the lengthwise direction of the positive electrode half-coating portion.

The positive electrode tab and the negative electrode tab may be positioned at the center of the radius of the cross section of the electrode assembly.

According to another aspect of the present disclosure, provided is a secondary battery including the electrode assembly, a case having an internal space and electrode assembly accommodating an electrolyte solution in the internal space, and a cap plate coupled to an upper portion of the case for sealing the case, the electrode assembly including a positive electrode plate having a positive electrode tab attached thereto; a negative electrode plate having a negative electrode tab attached thereto; and a separator interposed between the positive electrode plate and the negative electrode plate, wherein the positive electrode plate, the separator, and the negative electrode plate are wound while being laminated such that the positive electrode tab protrudes from the longitudinal upper portion of the electrode assembly by a predetermined length, the negative electrode tab protrudes from the longitudinal lower portion of the electrode assembly by a predetermined length, the positive electrode tab and the negative electrode tab are at a location corresponding to a value between 1/3 of the radius of the cross section of the electrode assembly and 2/3 thereof, and the lower portion of the positive electrode tab and the upper portion of the negative electrode tab do not overlap each other.

### ADVANTAGEOUS EFFECTS OF DISCLOSURE

As described above, in the electrode assembly according to the present invention and the secondary battery comprising the same, the positive electrode tab and negative electrode tab are aligned on a same line approximately at the center of the radius of the cross section of the electrode assembly and are attached so as not to overlap each other in the longitudinal direction, thereby preventing lowering of the winding roundness.

In addition, in the electrode assembly according to the present invention and the secondary battery comprising the same, a positive electrode plate half-coating portion is formed on a positive electrode plate, which is adjacent to the negative electrode tab, and has no positive electrode tab formed thereon, thereby preventing precipitation of lithium during overcharging.

### BRIEF DESCRIPTION OF DRAWINGS

FIGS. 1A, 1B, 1C and 1D are a perspective view, an exploded perspective view, a longitudinal cross-sectional view and a transverse cross-sectional view of a secondary battery according to an embodiment of the present invention.
FIG. 2 is a cross-sectional view illustrating states before an electrode assembly of the secondary battery illustrated in FIGS. 1A to 1D is wound.
FIG. 3 is an enlarged transverse cross-sectional view illustrating a state after the electrode assembly illustrated in FIG. 2 is wound.
FIGS. 4A and 4B are enlarged transverse cross-sectional view additionally illustrating positions to which the positive and negative electrode tabs are attached in the transverse cross-sectional view of the electrode assembly illustrated in FIG. 3.
FIG. 5 is a cross-sectional view illustrating another example of the state before an electrode assembly of the secondary battery illustrated in FIGS. 1A to 1D is wound.
FIG. 6 is a partially enlarged transverse cross-sectional view illustrating a state after the electrode assembly illustrated in FIG. 5 is wound.
FIG. 7 is a cross-sectional view illustrating another example of the state before an electrode assembly of the secondary battery illustrated in FIGS. 1A to 1D is wound.
FIG. 8 is a partially enlarged transverse cross-sectional view illustrating a state after the electrode assembly illustrated in FIG. 7 is wound.
FIG. 9 is a cross-sectional view illustrating another example of the state before an electrode assembly of the secondary battery illustrated in FIGS. 1A to 1D is wound.
FIG. 10 is a partially enlarged transverse cross-sectional view illustrating a state after the electrode assembly illustrated in FIG. 9 is wound.

### BEST MODE

Hereinafter, a preferred embodiment of the present invention will be described in detail. Various embodiments of the present invention may be embodied in many different forms and should not be construed as being limited to the example embodiments set forth herein. Rather, these example embodiments of the invention are provided so that this invention will be thorough and complete and will convey inventive concepts of the invention to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present and the element A and the element B are indirectly connected to each other.

The terminology used herein is for the purpose of describing particular embodiments only and is not intended to be limiting of the invention. As used herein, the singular forms are intended to include the plural forms as well, unless the context clearly indicates otherwise. It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "on" or "above" the other elements or features. Thus, the exemplary term "below" can encompass both an orientation of above and below.

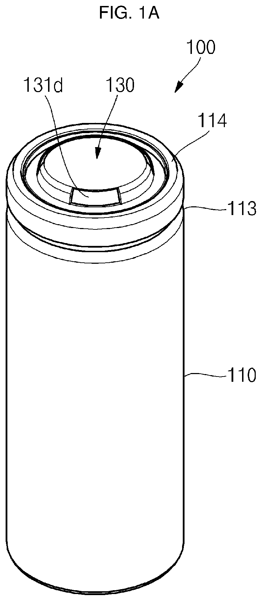

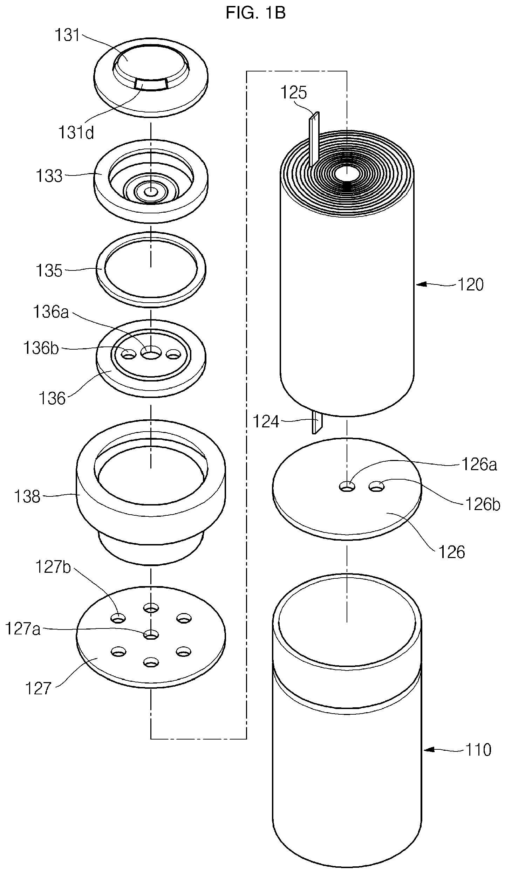

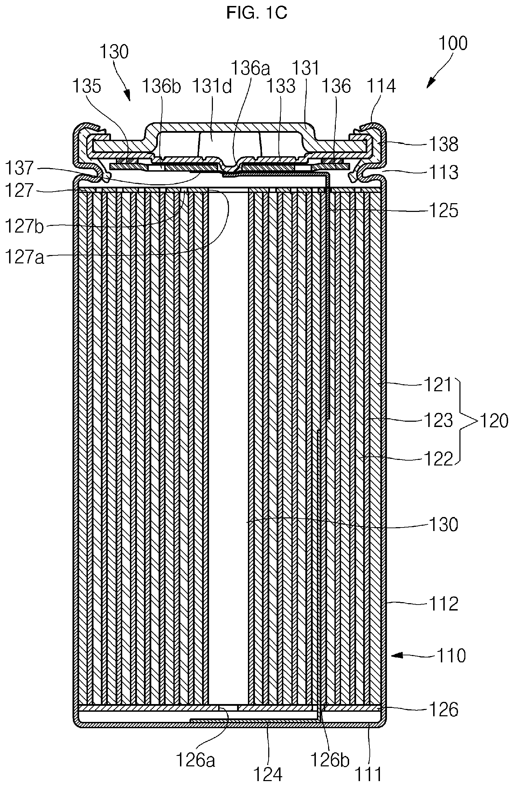

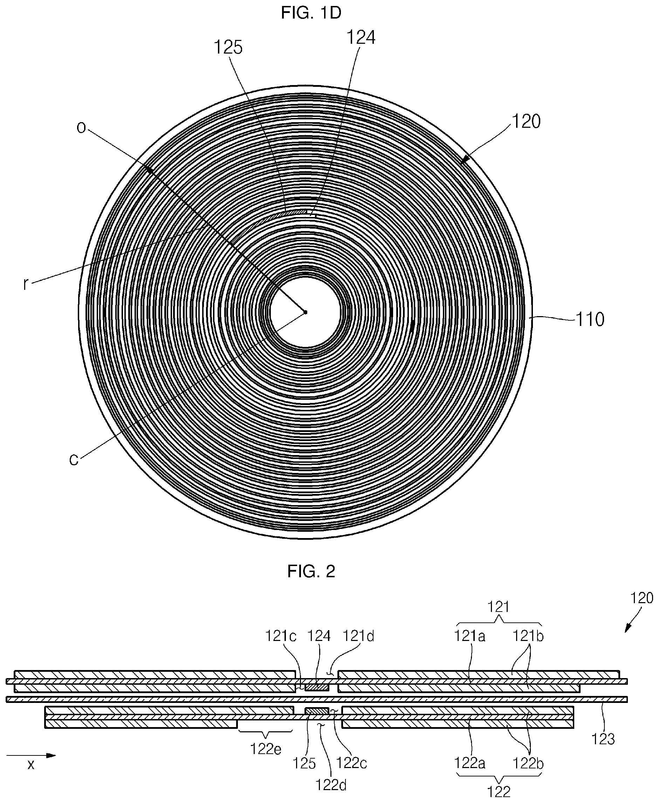

FIGS. 1A, 1B, 1C and 1D are a perspective view, an exploded perspective view, a longitudinal cross-sectional view and a transverse cross-sectional view of a secondary battery 100 according to an embodiment of the present invention. Here, the longitudinal cross-section is a cross-sectional plane of the secondary battery 100 taken in a longitudinal direction, and the transverse cross-section is a cross-sectional plane of the secondary battery 100 taken in a winding direction of the secondary battery 100.

As illustrated in FIGS. 1A, 1B, 1C and 1D, the secondary battery 100 according to the present invention includes a case 110, an assembly 120 accommodated in the case 110, and a cap assembly 130 sealing a top opening of the case 110.

The case 110 includes a circular lower portion 111 and side portions 112 upwardly extending from the lower portion 111 by a predetermined length. Here, the secondary battery 100 is illustrated as a cylindrical secondary battery, but aspects of the present invention are not limited thereto. For example, a prismatic or pouch-type secondary battery may also be applied to the present invention. During the manufacture of the secondary battery 100, an upper portion of the case 110 is in an opened state. Therefore, the electrode assembly 120 may be inserted into the case 110 together with an electrolyte solution for assembling the secondary battery 100. The case 110 may be made of steel, a steel alloy, aluminum, an aluminum alloy, or equivalents thereof, but aspects of the present invention are not limited thereto. In addition, in order to prevent or substantially prevent the electrode assembly 120 from being deviated to the outside, an inwardly recessed beading part 113 may be formed at a lower portion of the cap assembly 130, and an inwardly bent crimping part 114 may be formed at an upper portion of the cap assembly 130.

The electrode assembly 120 is accommodated within the case 110 together with the electrolyte solution. Here, the electrolyte solution is an organic solution containing a salt injected to allow lithium ions to move between a positive electrode and a negative electrode of the electrode assembly 120. The electrolyte solution may include a nonaqueous organic electrolyte solution, which is a mixture of a lithium salt, such as LiPF6, LiBF4 or LiClO4, and a high-purity organic solvent, but is not limited thereto.

The electrode assembly 120 includes a negative electrode plate 121 coated with a negative electrode active material, a positive electrode plate 122 coated with a positive electrode active material, and a separator 123 interposed between the negative electrode plate 121 and the positive electrode plate 122 and allowing only lithium ions to move between the negative electrode plate 121 and the positive electrode plate 122 while preventing or substantially preventing electrical shorts from occurring between the negative electrode plate 121 and the positive electrode plate 122. The negative electrode plate 121, the positive electrode plate 122, and the separator 123 are wound in a substantially cylindrical configuration. In addition, a negative electrode tab 124 downwardly protruding by a length (e.g., a predetermined length) and extending may be attached to the negative electrode plate 121, and a positive electrode tab 125 upwardly protruding by a predetermined length and extending may be attached to the positive electrode plate 122, or vice versa.

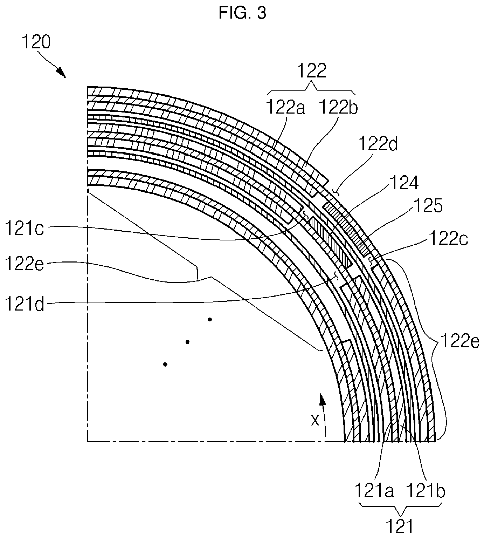

Additionally, referring to FIG. 2, a cross-sectional view illustrating states before an electrode assembly of the secondary battery illustrated in FIGS. 1A to 1D is wound is illustrated. In addition, referring to FIG. 3, an enlarged transverse cross-sectional view illustrating a state after the electrode assembly illustrated in FIG. 2 is wound is illustrated. Hereinafter, the configurations of the secondary battery and the electrode assembly according to the present invention will be described in detail with reference to FIGS. 2 and 3.

First, the negative electrode plate 121 of the electrode assembly 120 includes a negative electrode current collecting plate 121a formed of a plate-shaped metal foil made of copper (Cu) or nickel (Ni) and a negative electrode coating layer 121 b formed of an active material including a transition metal oxide on both surfaces of the negative electrode current collecting plate 121a. The negative electrode plate 121 may include a negative electrode tab 124 attached to one surface of the negative electrode current collecting plate 121a. A portion of the negative electrode tab 124 may be welded and attached to the negative electrode current collecting plate 121a, and the negative electrode tab 124 may downwardly protrude by a predetermined length along the lengthwise direction of the electrode assembly 120.

In addition, the negative electrode current collecting plate 121a includes a first negative electrode non-coating portion 121c, in which the negative electrode coating layer 121b is not formed, at opposite sides, that is, at the same side as the winding direction "x" and at the opposite side thereof, on the one surface to which the negative electrode tab 124 is attached. That is to say, the negative electrode tab 124 is attached to the surface of the negative electrode current collecting plate 121a of the negative electrode plate 121 so as to be spaced apart from the negative electrode coating layer 121b. In addition, the negative electrode current collecting plate 121a may further include a second negative electrode non-coating portion 121d without the negative electrode coating layer 121b at a region corresponding to the negative electrode tab 124 and at a region corresponding to the region where the first negative electrode non-coating portion 121c is formed, on the other surface opposite to the one surface to which the negative electrode tab 124 is attached.

On the cross-sectional plane of the wound electrode assembly 120, the negative electrode tab 124 may be positioned at a location corresponding to a value between 1/3 and 2/3 of a cross-sectional radius r corresponding to a length ranging from a winding center "c" to an outermost portion "o". Preferably, the negative electrode tab 124 is positioned roughly at the center of the cross-sectional radius r of the wound electrode assembly 120. The negative electrode tab 124 may be made of copper or nickel, but aspects of the present invention are not limited thereto.

First, the positive electrode plate 122 includes a positive electrode current collecting plate 122a formed of a plate-shaped metal foil made of aluminum (Al) and a positive electrode coating layer 122b made of a transition metal oxide, coated on both surfaces of the positive electrode current collecting plate 122. The positive electrode plate 122 has a positive electrode tab 125 attached to the one surface of the positive electrode current collecting plate 122a. A portion of the positive electrode tab 125 may be welded and attached to the positive electrode current collecting plate 122a, and the positive electrode tab 125 may upwardly protrude by a predetermined length along the lengthwise direction of the electrode assembly 120.

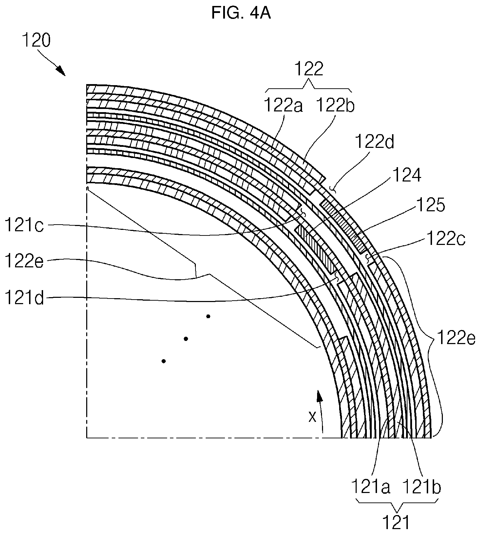

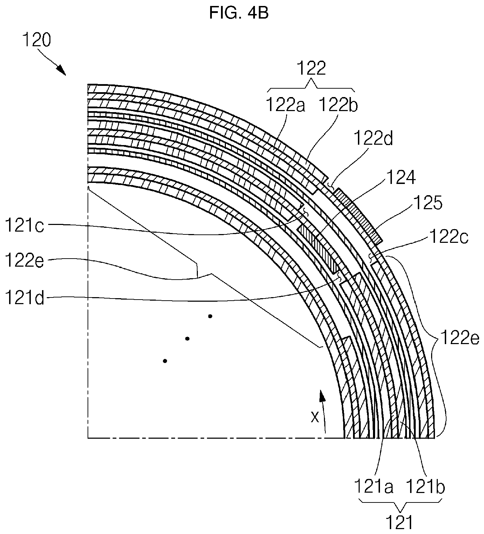

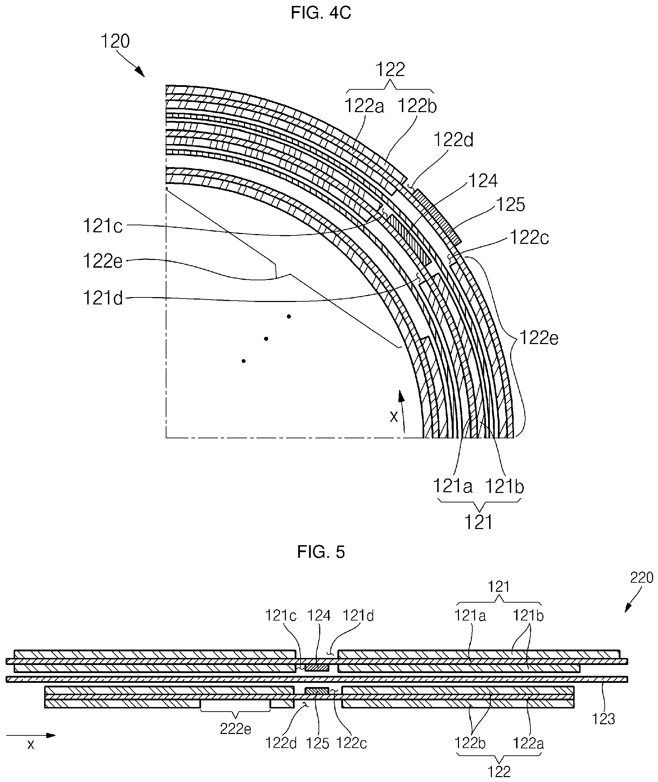

On the cross-sectional plane of the wound electrode assembly 120, the positive electrode tab 125 may be positioned at a location corresponding to a value between 1/3 and 2/3 of the cross-sectional radius r corresponding to a length ranging from the winding center "c" to the outermost portion "o". Preferably, the positive electrode tab 125 is positioned roughly at the center of the cross-sectional radius r of the wound electrode assembly 120. In addition, the positive electrode tab 125 may be positioned on a surface facing the negative electrode tab 124 and the separator 123 in the wound electrode assembly 120, but aspects of the present invention are not limited thereto. The positive electrode tab 125 and the negative electrode tab 124 may be positioned on a same surface or on opposite surfaces in the wound electrode assembly 120 including the positive electrode plate 122 and the negative electrode plate 121, as illustrated in FIGS. 4A to 4C. Here, the surfaces in the same direction refers to surfaces equally facing the outermost portion "o" in the wound electrode assembly 120 or surfaces equally facing the winding center "c". In addition, the surfaces in opposite directions may mean that the negative electrode tab 124 is formed on a surface facing the winding center "c" in a case where the positive electrode tab 125 is formed on a surface facing the outermost portion "o" in the wound electrode assembly 120, or vice versa. That is to say, the present invention does not limit the meaning of the opposite surfaces of the positive electrode plate 122 and the negative electrode plate 121, which are formed in a foil type, to the surfaces to which the positive electrode tab 125 and the negative electrode tab 124 are attached, respectively.

In addition, the positive electrode tab 125 and the negative electrode tab 124 may be aligned on a same line in a lengthwise direction of the wound electrode assembly 120. In addition, the positive electrode tab 125 and the negative electrode tab 124 may be positioned so as not to overlap each other in the lengthwise direction of the wound electrode assembly 120. That is to say, the positive electrode tab 125 and the negative electrode tab 124 may be positioned on the same line in the lengthwise direction of the electrode assembly 120 such that a lower portion of the positive electrode tab 125 and an upper portion of the negative electrode tab 124 do not overlap each other. This is for the purpose of preventing or substantially preventing the winding roundness of the electrode assembly 120 from being lowered, which may occur in a case where the positive electrode tab 125 and the negative electrode tab 124, which are thicker than the positive electrode plate 122 and the negative electrode plate 121, overlap each other in the lengthwise direction of the electrode assembly 120. The positive electrode tab 125 may be positioned at the outward side of the negative electrode tab 124 on the basis of the separator 123 in the electrode assembly 120. The positive electrode tab 125 may be made of aluminum, but aspects of the present invention are not limited thereto.

In addition, on one surface of the positive electrode current collecting plate 122a having the positive electrode tab 125 attached thereto, the positive electrode plate 122 includes a first positive electrode non-coating portion 122c without the positive electrode coating layer 122b at opposite sides, that is, at the same side as the winding direction "x" and at the opposite side thereof. That is to say, the positive electrode tab 125 is attached to the one surface of the positive electrode current collecting plate 122a of the positive electrode plate 122 so as to be spaced apart from the positive electrode coating layer 122b. In addition, on the other surface opposite to the surface to which the positive electrode tab 125 is attached, the positive electrode plate 122 may further include a second positive electrode non-coating portion 122d without the positive electrode coating layer 122b at a region corresponding to the positive electrode tab 125 and a region corresponding to the region where the first positive electrode non-coating portion 122c is provided.

In addition, the positive electrode plate 122 may have the second positive electrode non-coating portion 122d further extending in a direction opposite to the winding direction "x". That is to say, on the other surface of the positive electrode current collecting plate 122a, the positive electrode plate 122 may further include the second positive electrode non-coating portion 122d, where the positive electrode coating layer 122b is not formed, extending by a predetermined length from the region having the positive electrode tab 125 attached thereto toward the opposite side of the winding direction "x." In the wound positive electrode plate 122, the second positive electrode non-coating portion 122d preferably extends one turn to the winding center "c" from the region to which the positive electrode tab 125 is attached. With the presence of the second positive electrode non-coating portion 122d, the positive electrode plate 122 may include a positive electrode half-coating portion 122e extending one turn from the positive electrode tab 125 to the opposite side of the winding direction "x." Here, the positive electrode half-coating portion 122e means that the positive electrode coating layer 122b is formed on only one surface of the positive electrode current collecting plate 122a. In FIGS. 2 and 3, the positive electrode half-coating portion 122e is provided such that a positive electrode coating layer is formed on one surface to which the positive electrode tab is attached, and a non-coating layer is formed on the other surface opposite to the one surface, and vice versa.

Here, in the wound electrode assembly 120, the positive electrode half-coating portion 122e is provided at a region of the positive electrode plate 122, in which the positive electrode tab 125 is not formed, in the inward and outward sides, and which is closest to the negative electrode plate 121 having the negative electrode tab 124 attached thereto. Here, the inward side means a region of the positive electrode plate closest to the winding center "c" on the basis of the negative electrode plate 121, and the outward side means a region of the positive electrode plate closest to the outermost portion "o" on the basis of the negative electrode plate 121. As such, the positive electrode plate 122 includes the positive electrode half-coating portion 122e provided at its region corresponding to the negative electrode tab 124, thereby preventing precipitation of lithium during overcharging.

In addition, the negative electrode tab 124 of the electrode assembly 120 may be welded to the lower portion 111 of the case 110. Therefore, the case 110 may operate as a negative electrode. Conversely, the positive electrode tab 125 may be welded to the lower portion 111 of the case 110, and in such a case, the case 110 may operate as a positive electrode.

Additionally, a first insulation plate 126 coupled to the case 110 and having a first hole 126a formed at its center and a second hole 126b formed at its outer region may be interposed between the electrode assembly 120 and the lower portion 111. The first insulation plate 126 may prevent the electrode assembly 120 from electrically contacting the lower portion 111 of the case 110. Specifically, the first insulation plate 126 may prevent the positive electrode plate 122 of the electrode assembly 120 from electrically contacting the lower portion 111 of the case 110. The first hole 126a may allow a large amount of gas generated due to abnormality of the secondary battery 100 to rapidly move upwards, and the second hole 126b may allow the negative electrode tab 124 to pass therethrough and be welded to the lower portion 111 of the case 110. Additionally, the electrode assembly 120 may further include a center pin (not shown) shaped of a hollow circular pipe, thereby allowing the large amount of gas generated due to abnormality of the secondary battery to be easily exhausted through an internal passageway of the center pin.

In addition, a second insulation plate 127 may be interposed between the electrode assembly 120 and the cap assembly 130, the second insulation plate 127 coupled to the case 110 and including a first hole 127a formed at its center and a plurality of second holes 127b formed at its outer regions. The second insulation plate 127 may prevent the electrode assembly 120 from electrically contacting the cap assembly 130. Specifically, the second insulation plate 127 may prevent the negative electrode plate 121 of the electrode assembly 120 from electrically contacting the cap assembly 130. The first hole 127a may allow a large amount of gas generated due to abnormality of the secondary battery to rapidly move toward the cap assembly 130, and some of the plurality of second holes 127b, through which the positive electrode tab 125 may pass, may allow the positive electrode tab 125 to be welded to the cap assembly 130. Additionally, some other second holes 127b may allow an electrolyte solution to rapidly flow into the electrode assembly 120 while injecting the electrolyte solution. The electrolyte solution may function as a movement medium of lithium ions generated by an electrochemical reaction taking place at the positive and negative electrode plates of the secondary battery 100 during charging and discharging.

The cap assembly 130 includes a cap-up 131 including a plurality of through holes 131d formed therein, a safety plate 133 installed under the cap-up 131, a connection ring 135 installed under the safety plate 133, a cap-down 136 coupled to the connection ring 135 and including first and second through holes 136a and 136b formed therein, a sub-plate 137 fixed to a lower portion of the cap-down 136 and electrically connected to the positive electrode tab 125, and an insulation gasket 138 insulating the cap-up 131, the safety plate 133, the connection ring 135, and the cap-down 136 from the side portions 112 of the case 110.

Here, the insulation gasket 138 is compressed between the beading part 113 formed at a substantially side portion of the case 110 and the crimping part 114. In addition, the through-holes 131d formed in the cap-up 131 and the through-hole 136b formed in the cap-down 136 may function to exhaust internal gases to the outside when an abnormal internal voltage is generated in the case 110. The safety plate 133 is first upwardly inverted by the internal voltage to be electrically disconnected from the sub-plate 137 and is then ruptured to release the internal gas to the outside.

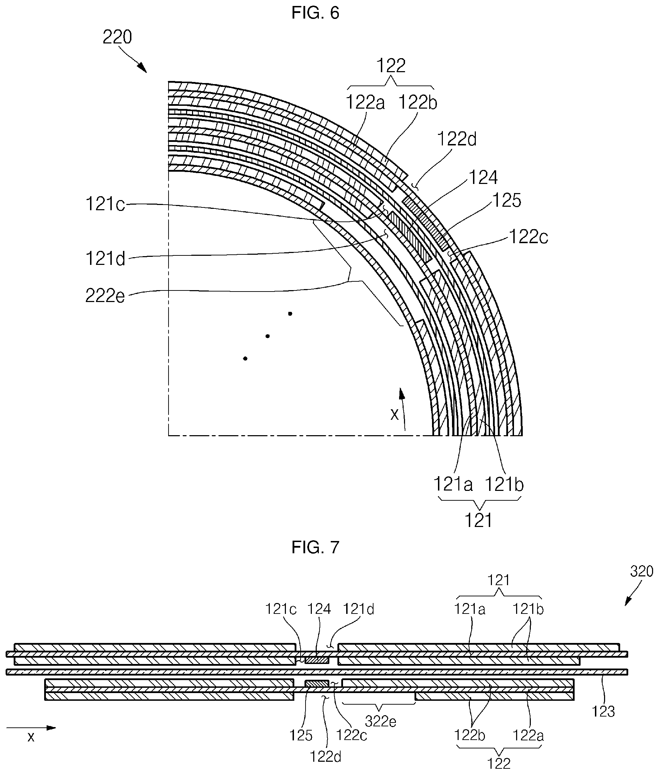

Referring to FIG. 5, a cross-sectional view illustrating another example of the state before an electrode assembly of the secondary battery illustrated in FIGS. 1A to 1D is wound is illustrated. In addition, referring to FIG. 6, a partially enlarged transverse cross-sectional view illustrating a state after the electrode assembly illustrated in FIG. 5 is wound is illustrated.

As described above, a case 110, a negative electrode plate 121 of an electrode assembly 220, the separator 123 of the electrode assembly 220, and a cap assembly 130 of the secondary battery illustrated in FIGS. 5 and 6 may be the same as those of the secondary battery 100 illustrated in FIGS. 1A, 1B and 1D. Therefore, the following description will focus on the configuration of a positive electrode plate 122 of the secondary battery with reference to FIGS. 1A, 1B and 1D with FIGS. 5 and 6.

The positive electrode plate 122 includes a positive electrode current collecting plate 122a formed of a plate-shaped metal foil made of aluminum (Al) and a positive electrode coating layer 122b formed of an active material including a transition metal oxide coated on both surfaces of the positive electrode current collecting plate 122a. Here, the positive electrode plate 122 may have a positive electrode tab 125 attached to one surface of the positive electrode current collecting plate 122a. A portion of the positive electrode tab 125 may be welded and attached to the positive electrode current collecting plate 122a, and the positive electrode tab 125 may upwardly protrude by a predetermined length along the lengthwise direction of the electrode assembly 220.

The positive electrode tab 125 may be positioned roughly at the center of the cross-sectional radius r of the wound electrode assembly 220. In an embodiment, the positive electrode tab 125 may be positioned at the same location as the negative electrode tab 124 and the separator 123 in the wound electrode assembly 220 so as to face each other, but aspects of the present invention are not limited thereto. The positive electrode tab 125 and the negative electrode tab 124 may be positioned on surfaces in the same direction or opposite directions in the wound electrode assembly 120 including the positive electrode plate 122 and the negative electrode plate 121, as illustrated in FIGS. 4A to 4C. That is to say, the present invention does not limit the meaning of the opposite surfaces of the positive electrode plate 122 and the negative electrode plate 121, which are formed in a foil type, to the surfaces to which the positive electrode tab 125 and the negative electrode tab 124 are attached.

In another embodiment, the positive electrode tab 125 and the negative electrode tab 124 may be aligned on a same line in a lengthwise direction of the wound electrode assembly 220. In addition, the positive electrode tab 125 and the negative electrode tab 124 may be positioned so as not to overlap each other in the lengthwise direction in the wound electrode assembly 220. That is to say, the positive electrode tab 125 and the negative electrode tab 124 may be positioned on the same line in the lengthwise direction of the electrode assembly 220 such that a lower portion of the positive electrode tab 125 and an upper portion of the negative electrode tab 124 do not overlap each other. This is for the purpose of preventing or substantially preventing the winding roundness of the electrode assembly 220 from being lowered, which may occur in a case where the positive electrode tab 125 and the negative electrode tab 124, which are thicker than the positive electrode plate 122 and the negative electrode plate 121, overlap each other in the lengthwise direction of the electrode assembly 220. The positive electrode tab 125 may be positioned at a region of the positive electrode plate 122 positioned at the outward side of the negative electrode tab 124 on the basis of the separator 123 in the wound electrode assembly 220. The positive electrode tab 125 may be made of aluminum, but aspects of the present invention are not limited thereto.

In addition, on the one surface of the positive electrode current collecting plate 122a having the positive electrode tab 125 attached thereto, the positive electrode plate 122 includes a first positive electrode non-coating portion 122c without the positive electrode coating layer 122b formed at opposite sides, that is, at the same side as the winding direction "x" and at the opposite side thereof. That is to say, the positive electrode tab 125 is attached to the one surface of the positive electrode current collecting plate 122a of the positive electrode plate 122 so as to be spaced apart from the positive electrode coating layer 122b. In addition, on the other surface opposite to the surface to which the positive electrode tab 125 is attached, the positive electrode plate 122 may further include a second positive electrode non-coating portion 122d without the positive electrode coating layer 122b at a region corresponding to the positive electrode tab 125 and a region corresponding to the region where the first positive electrode non-coating portion 122c is provided.

In addition, in the wound electrode assembly 220, a positive electrode half-coating portion 222e is provided on the positive electrode plate 122, in which the positive electrode tab 125 is not located at the inward side and the outward side, and which is closest to the negative electrode plate 121 having the negative electrode tab 124 attached thereto. Here, the positive electrode half-coating portion 222e means that the positive electrode coating layer 122b is formed on only one surface of the positive electrode current collecting plate 122a and a non-coating layer is formed on the other surface opposite to the one surface. The positive electrode half-coating portion 222e is provided at a region of the positive electrode plate 122 located at the inward side, which is closest to the negative electrode plate 121 having the negative electrode tab 124 attached thereto, in the wound electrode assembly 220.

Here, the inward side means a region of the positive electrode plate 122 positioned in the same direction as the winding center "c" on the basis of the negative electrode plate 121, and the outward side means a region of the positive electrode plate in the same direction as the outermost portion "o" on the basis of the negative electrode plate 121. In addition, the positive electrode half-coating portion 222e may be formed to have a longitudinal width, which is perpendicular to the lengthwise direction thereof, larger than that of the first negative electrode non-coating portion 121c or the second negative electrode non-coating portion 121d. This is for the purpose of preventing misalignment of the positive electrode tab 125, the negative electrode tab 124 and the positive electrode half-coating portion 222e when the electrode assembly 220 is wound.

In addition, in the positive electrode half-coating portion 222e illustrated in FIGS. 5 and 6, the positive electrode coating portion 122b is formed on one surface to which the positive electrode tab 125 is attached and a non-coating portion is formed on the other surface, or vice versa. As such, the positive electrode plate 122 establishes the positive electrode half-coating portion 222e at its region corresponding to the negative electrode tab 124, thereby preventing precipitation of lithium during overcharging.

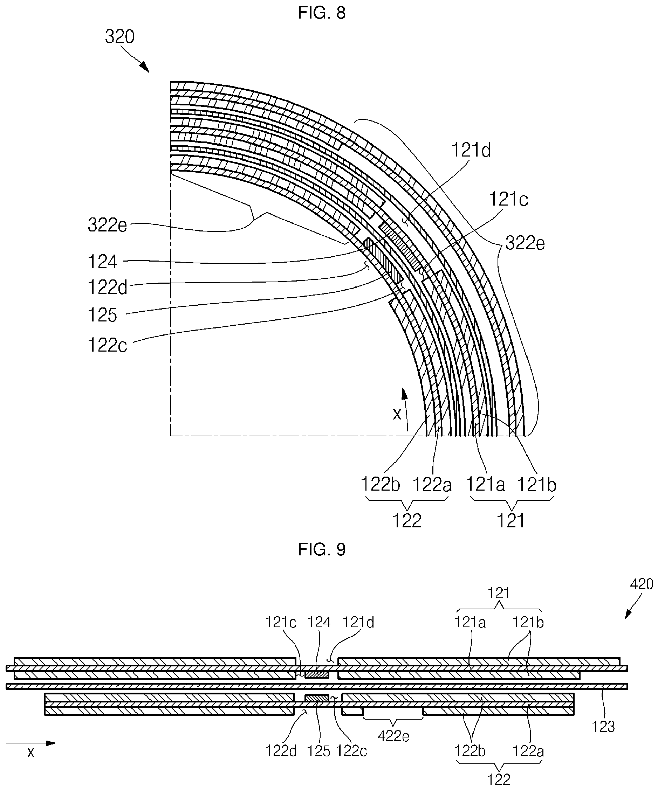

Referring to FIG. 7, a cross-sectional view illustrating another example of the state before an electrode assembly of the secondary battery illustrated in FIGS. 1A to 1D is wound is illustrated. In addition, referring to FIG. 8, a partially enlarged transverse cross-sectional view illustrating a state after the electrode assembly illustrated in FIG. 7 is wound is illustrated.

As described above, a case 110, a negative electrode plate 121 of an electrode assembly 320, a separator 123 of the electrode assembly 320, and a cap assembly 130 of the secondary battery illustrated in FIGS. 7 and 8 may be the same as those of the secondary battery 100 illustrated in FIGS. 1A, 1B and 1D. Therefore, the following description will focus on the configuration of a positive electrode plate 122 of the electrode assembly 320 of the secondary battery with reference to FIGS. 1A, 1B and 1D with FIGS. 7 and 8.

The positive electrode plate 122 includes a positive electrode current collecting plate 122a formed of a plate-shaped metal foil made of aluminum (Al) and a positive electrode coating layer 122b formed of an active material including a transition metal oxide coated on both surfaces of the positive electrode current collecting plate 122a. Here, the positive electrode plate 122 may have a positive electrode tab 125 attached to one surface of the positive electrode current collecting plate 122a. A portion of the positive electrode tab 125 may be welded and attached to the positive electrode current collecting plate 122a, and the positive electrode tab 125 may upwardly protrude by a predetermined length along the lengthwise direction of the electrode assembly 320.

The positive electrode tab 125 may be positioned roughly at the center of the cross-sectional radius r of the wound electrode assembly 320. In an embodiment, the positive electrode tab 125 may be positioned at the same location as the negative electrode tab 124 and the separator 123 in the wound electrode assembly 320 so as to face each other, but aspects of the present invention are not limited thereto. The positive electrode tab 125 and the negative electrode tab 124 may be positioned on a same surface or on opposite surfaces in the wound electrode assembly 320 including the positive electrode plate 122 and the negative electrode plate 121, as illustrated in FIGS. 4A to 4C. That is to say, the present invention does not limit the meaning of the opposite surfaces of the positive electrode plate 122 and the negative electrode plate 121, which are formed in a foil type, to the surfaces to which the positive electrode tab 125 and the negative electrode tab 124 are attached.

In another embodiment, the positive electrode tab 125 and the negative electrode tab 124 may be aligned on a same line in the lengthwise direction of the wound electrode assembly 320. In addition, the positive electrode tab 125 and the negative electrode tab 124 may be positioned so as not to overlap each other in the lengthwise direction of the wound electrode assembly 320. That is to say, the positive electrode tab 125 and the negative electrode tab 124 may be positioned on the same line in the lengthwise direction of the electrode assembly 320 such that a lower portion of the positive electrode tab 125 and an upper portion of the negative electrode tab 124 do not overlap each other. This is for the purpose of preventing or substantially preventing the winding roundness of the electrode assembly 320 from being lowered, which may occur in a case where the positive electrode tab 125 and the negative electrode tab 124, which are thicker than the positive electrode plate 122 and the negative electrode plate 121, overlap each other in the lengthwise direction of the electrode assembly 320. In the electrode assembly 320, the positive electrode tab 125 may be positioned at the inward side of the negative electrode plate 121 at a portion to which the negative electrode tab 124 is attached, on the basis of the separator 123. The positive electrode tab 125 may be made of aluminum, but aspects of the present invention are not limited thereto.

In addition, on the one surface of the positive electrode current collecting plate 122a having the positive electrode tab 125 attached thereto, the positive electrode plate 122 includes a first positive electrode non-coating portion 122c, in which the positive electrode coating layer 122b is not formed, at opposite sides, that is, at the same side as the winding direction "x" and at the opposite side thereof. That is to say, the positive electrode tab 125 is attached to the one surface of the positive electrode current collecting plate 122a of the positive electrode plate 122 so as to be spaced apart from the positive electrode coating layer 122b. In addition, the positive electrode plate 122 may further include a second positive electrode non-coating portion 122d without the positive electrode coating layer 122b at a region corresponding to the positive electrode tab 125 and a region corresponding to the region where the first positive electrode non-coating portion 121c is formed, on the other surface opposite to the one surface to which the positive electrode tab 125 is attached.

In addition, the positive electrode plate 122 is configured such that the second positive electrode non-coating portion 122d extends more to the winding direction "x" That is to say, the positive electrode plate 122 may further include the second positive electrode non-coating portion 122d without the positive electrode coating layer 122b, on the other surface of the positive electrode current collecting plate 122a by a predetermined length from the region where the positive electrode tab 125 is attached in the winding direction "x." Preferably, the second positive electrode non-coating portion 122d extends one turn toward the outermost portion "o" from a region of the wound positive electrode plate 122, corresponding to the region where the positive electrode tab 125 is attached. With the presence of the second positive electrode non-coating portion 122d, the positive electrode plate 122 may include a positive electrode half-coating portion 322e extending one turn from the positive electrode tab 125 to the opposite side of the winding direction "x". Here, the positive electrode half-coating portion 322e means that the positive electrode coating layer 122b is formed on only one surface of the positive electrode current collecting plate 122a. In the positive electrode half-coating portion 322e illustrated in FIGS. 7 and 8, a positive electrode coating portion 122b is formed on one surface to which the positive electrode tab 125 is attached, and a non-coating portion is formed on the other surface opposite to the one surface, or vice versa.

Here, in the wound electrode assembly 320, the positive electrode half-coating portion 322e is provided at the positive electrode plate 122, in which the positive electrode tab 125 is not formed at the inward and outward sides, and which is closest to the negative electrode plate 121 having the negative electrode tab 124 attached thereto. Here, the inward side means the positive electrode plate positioned in the same direction as the winding center "c" on the basis of the negative electrode plate 121, and the outward side means the positive electrode plate positioned in the same direction as the outermost portion "o" on the basis of the negative electrode plate 121. As such, the positive electrode plate 122 includes the positive electrode half-coating portion 322e provided at its region corresponding to the negative electrode tab 124, thereby preventing precipitation of lithium during overcharging.

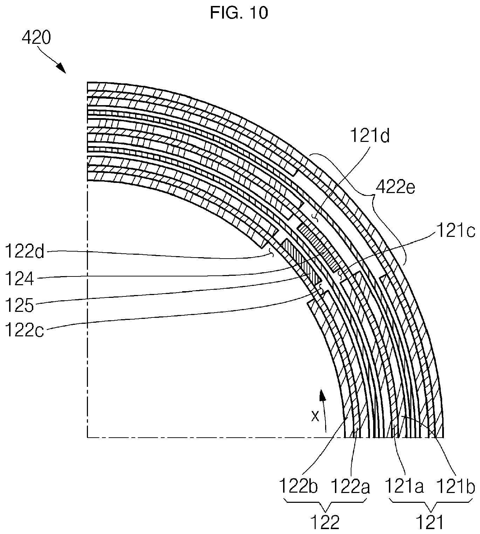

Referring to FIG. 9, a cross-sectional view illustrating another example of the state before an electrode assembly of the secondary battery illustrated in FIGS. 1A to 1D is wound is illustrated. In addition, referring to FIG. 10, a partially enlarged transverse cross-sectional view illustrating a state after the electrode assembly illustrated in FIG. 9 is wound is illustrated.

As described above, a case 110, a negative electrode plate 121 of an electrode assembly 420, the separator 123 of the electrode assembly 420, and a cap assembly 130 of the secondary battery illustrated in FIGS. 9 and 10 may be the same as those of the secondary battery 100 illustrated in FIGS. 1A, 1B and 1D. Therefore, the following description will focus on the configuration of a positive electrode plate 122 of the electrode assembly 420 of the secondary battery with reference to FIGS. 1A, 1B and 1D with FIGS. 7 and 8.

The positive electrode plate 122 includes a positive electrode current collecting plate 122a formed of a plate-shaped metal foil made of aluminum (Al) and a positive electrode coating layer 122b formed of an active material including a transition metal oxide coated on both surfaces of the positive electrode current collecting plate 122a. The positive electrode plate 122 may have a positive electrode tab 125 attached to one surface of the positive electrode current collecting plate 122a. A portion of the positive electrode tab 125 may be welded and attached to the positive electrode current collecting plate 122a, and the positive electrode tab 125 may upwardly protrude by a predetermined length along the lengthwise direction of the electrode assembly 420.

The positive electrode tab 125 may be positioned roughly at the center of the cross-sectional radius r of the wound electrode assembly 420. In addition, the positive electrode tab 125 may be positioned at the same location as the negative electrode tab 124 and the separator 123 in the wound electrode assembly 420 so as to face each other, but aspects of the present invention are not limited thereto. The positive electrode tab 125 and the negative electrode tab 124 may be positioned on a same surface or on opposite surfaces in the wound electrode assembly 420 including the positive electrode plate 122 and the negative electrode plate 121, as illustrated in FIGS. 4A to 4C, but aspects of the present invention are not limited thereto. That is to say, the present invention does not limit the meaning of the opposite surfaces of the positive electrode plate 122 and the negative electrode plate 121, which are formed in a foil type, to the surfaces to which the positive electrode tab 125 and the negative electrode tab 124 are attached.

In addition, the positive electrode tab 125 and the negative electrode tab 124 may be aligned on a same line in the lengthwise direction of the wound electrode assembly 420. Alternatively, the positive electrode tab 125 and the negative electrode tab 124 may be positioned so as not to overlap each other in the lengthwise direction of the wound electrode assembly 420. This is for the purpose of preventing or substantially preventing the winding roundness of the electrode assembly 420 from being lowered, which may occur in a case where the positive electrode tab 125 and the negative electrode tab 124, which are thicker than the positive electrode plate 122 and the negative electrode plate 121, overlap each other in the lengthwise direction of the electrode assembly 420. In the electrode assembly 420, the positive electrode tab 125 may be positioned at the inward side of the negative electrode plate 121 positioned at a portion to which the negative electrode tab 124 is attached, on the basis of the separator 123. The positive electrode tab 125 may be made of aluminum, but aspects of the present invention are not limited thereto.

In addition, the positive electrode plate 122 includes a first positive electrode non-coating portion 122c without the positive electrode coating layer 122b formed at opposite sides, that is, at the same side as the winding direction "x" and at the opposite side thereof, on one surface of the positive electrode current collecting plate 122a having the positive electrode tab 125 attached thereto. That is to say, the positive electrode tab 125 is attached to the one surface of the positive electrode current collecting plate 122a of the positive electrode plate 122 so as to be spaced apart from the positive electrode coating layer 122b. In addition, the positive electrode plate 122 may further include a second positive electrode non-coating portion 122d without the positive electrode coating layer 122b at a region corresponding to the positive electrode tab 125 and a region corresponding to the region where the first positive electrode non-coating portion 121c is formed, on the other surface opposite to the one surface to which the positive electrode tab 125 is attached.

In addition, in the wound electrode assembly 420, a positive electrode half-coating portion 422e is provided at the positive electrode plate 122, in which the positive electrode tab 125 is not located at the inward side and the outward side, and which is closest to the negative electrode plate 121 having the negative electrode tab 124 attached thereto. Here, the positive electrode half-coating portion 422e means that the positive electrode coating layer 122b is formed on only one surface of the positive electrode current collecting plate 122a and a non-coating layer is formed on the other surface opposite to the one surface. The positive electrode half-coating portion 422e is provided at the positive electrode plate 122 located at the outward side, which is closest to the negative electrode plate 121 having the negative electrode tab 124 attached thereto, in the wound electrode assembly 420.

Here, the inward side means a positive electrode plate positioned in the same direction as the winding center "c" on the basis of the negative electrode plate 121, and the outward side means a positive electrode plate in the same direction as the outermost portion "o" on the basis of the negative electrode plate 121. In addition, the positive electrode half-coating portion 422e may be formed to have a longitudinal width, which is perpendicular to the lengthwise direction thereof, larger than that of the first negative electrode non-coating portion 121c or the second negative electrode non-coating portion 121d. This is for the purpose of preventing misalignment of the positive electrode tab 125, the negative electrode tab 124 and the positive electrode half-coating portion 422e when the electrode assembly 420 is wound.

In addition, in FIGS. 9 and 10, the positive electrode half-coating portion 422e is provided such that a positive electrode coating layer 122b is formed on one surface to which the positive electrode tab is attached, and a non-coating layer is formed on the other surface opposite to the one surface, and vice versa. As such, the positive electrode plate 122 includes the positive electrode plate half-coating portion 422e formed at a region corresponding to the negative electrode tab 124, thereby preventing precipitation of lithium during overcharging of the secondary battery.

## Claims

1. An electrode assembly comprising:
a positive electrode plate having a positive electrode tab attached thereto;
a negative electrode plate having a negative electrode tab attached thereto; and
a separator interposed between the positive electrode plate and the negative electrode plate,
wherein the positive electrode plate, the separator, and the negative electrode plate are wound while being laminated such that the positive electrode tab protrudes from the longitudinal upper portion of the electrode assembly by a predetermined length, the negative electrode tab protrudes from the longitudinal lower portion of the electrode assembly by a predetermined length,
the positive electrode tab and the negative electrode tab are at a location corresponding to a value between 1/3 of the radius of the cross section of the electrode assembly and 2/3 thereof, and
the lower portion of the positive electrode tab and the upper portion of the negative electrode tab do not overlap each other.

2. The electrode assembly of claim 1, wherein the positive electrode tab and the negative electrode tab are aligned on a same line in a lengthwise direction of the electrode assembly, and are positioned at the positive electrode plate and the negative electrode plate that are closest to each other on the basis of the separator.

3. The electrode assembly of claim 2, wherein a positive electrode half-coating portion is provided at an outer region of the positive electrode plate, in which the positive electrode tab is positioned at the inward side of the negative electrode tab on the basis of the separator, and which is closest to the negative electrode tab on the basis of the separator, the positive electrode half-coating portion having a positive electrode coating layer formed on only one surface of a positive electrode current collector of the positive electrode, and a non-coating layer formed on the other surface opposite to the one surface.

4. The electrode assembly of claim 3, wherein the positive electrode plate includes a first positive electrode non-coating portion having no positive electrode coating layer formed on one surface of the positive electrode current collector, the first positive electrode non-coating portion having the positive electrode tab attached thereto, and a second positive electrode non-coating portion having no positive electrode coating layer formed at a region corresponding to the region where the first positive electrode non-coating portion is formed, on the other surface opposite to the one surface of the positive electrode current collector, wherein the second positive electrode non-coating portion extends one turn outwardly from the positive electrode tab, thus forming the positive electrode plate half-coating layer.

5. The electrode assembly of claim 3, wherein the negative electrode plate further comprises a first negative electrode non-coating portion having no negative electrode coating layer formed on one surface of a negative electrode current collector, the first negative electrode non-coating portion having the negative electrode tab attached thereto, and a second negative electrode non-coating portion having no negative electrode coating layer formed at a region corresponding to the region where the first negative electrode non-coating portion is formed, on the other surface opposite to the one surface of the negative electrode current collector, wherein the positive electrode half-coating portion has a longitudinal width larger than that of the first negative electrode non-coating portion, the longitudinal width being perpendicular to the lengthwise direction of the positive electrode half-coating portion.

6. The electrode assembly of claim 3, wherein the positive electrode plate includes a first positive electrode non-coating portion having no positive electrode coating layer formed on one surface of the positive electrode current collector, the first positive electrode non-coating portion having the positive electrode tab attached thereto, and a second positive electrode non-coating portion having no positive electrode coating layer formed at a region corresponding to the region where the first positive electrode non-coating portion is formed, on the other surface opposite to the one surface of the positive electrode current collector, wherein the first positive electrode non-coating portion extends one turn outwardly from the positive electrode tab to the outward side, thus forming the positive electrode plate half-coating layer.

7. The electrode assembly of claim 2, wherein a positive electrode half-coating portion is provided at an inner region of the positive electrode plate, in which the positive electrode tab is positioned at the inward side of the negative electrode tab on the basis of the separator, and which is closest to the negative electrode tab on the basis of the separator, the positive electrode half-coating portion having a positive electrode coating layer formed on only one surface of a positive electrode current collector of the positive electrode, and a non-coating layer formed on the other surface opposite to the one surface.

8. The electrode assembly of claim 7, wherein the positive electrode plate includes a first positive electrode non-coating portion having no positive electrode coating layer formed on one surface of the positive electrode current collector, the first positive electrode non-coating portion having the positive electrode tab attached thereto, and a second positive electrode non-coating portion having no positive electrode coating layer formed at a region corresponding to the region where the first positive electrode non-coating portion is formed, on the other surface opposite to the one surface of the positive electrode current collector, wherein the second positive electrode non-coating portion extends one turn inwardly from the positive electrode tab, thus forming the positive electrode plate half-coating layer.

9. The electrode assembly of claim 7, wherein the negative electrode plate further comprises a first negative electrode non-coating portion having no negative electrode coating layer formed on one surface of a negative electrode current collector, the first negative electrode non-coating portion having the negative electrode tab attached thereto, and a second negative electrode non-coating portion having no negative electrode coating layer formed at a region corresponding to the region where the first negative electrode non-coating portion is formed, on the other surface opposite to the one surface of the negative electrode current collector, wherein the positive electrode half-coating portion has a longitudinal width larger than that of the first negative electrode non-coating portion, the longitudinal width being perpendicular to the lengthwise direction of the positive electrode half-coating portion.

10. The electrode assembly of claim 1, wherein the positive electrode tab and the negative electrode tab are positioned at the center of the radius of the cross section of the electrode assembly.

11. A secondary battery comprising:
the electrode assembly set forth in claim 1;
a case having an internal space and electrode assembly accommodating an electrolyte solution in the internal space; and
a cap plate coupled to an upper portion of the case for sealing the case.
